# EUROPEAN PATENT SPECIFICATION

(11) **EP 4 383 530 B1**
(45) Date of publication and mention of the grant of the patent: **29.07.2026**
(21) Application number: 22212319.2
(22) Date of filing: 08.12.2022
(51) Int. Cl.: H02K 5/16, F16C 41/04

(54) **AN ELECTRICAL MACHINE AND A METHOD FOR IMPLEMENTING A TRANSPORTATION SUPPORT OF THE SAME**
ELEKTRISCHE MASCHINE UND VERFAHREN ZUR IMPLEMENTIERUNG EINER TRANSPORTUNTERSTÜTZUNG DAFÜR
MACHINE ÉLECTRIQUE ET PROCÉDÉ DE MISE EN UVRE D'UN SUPPORT DE TRANSPORT DE CELLE-CI

(43) Date of publication of application: 12.06.2024
(73) Proprietor: Danfoss A/S, 6430 Nordborg (DK)
(72) Inventor: KNUUTILA, Tomi, 53600 LAPPEENRANTA (FI); LIPPONEN, Aki, 53600 LAPPEENRANTA (FI); NORDVALL, Aki, 53600 LAPPEENRANTA (FI); OVASKA, Mikko, 53600 LAPPEENRANTA (FI)
(74) Representative: Väänänen, Janne Kalervo

(56) References cited:
- EP-A1- 3 537 573
- US-A1- 2015 030 277

## Description

### Technical field

The disclosure relates generally to electrical machines. More particularly, the disclosure relates to an electrical machine that comprises a stator, a rotor, bearings configured to rotatably support the rotor with respect to the stator, and means for implementing a transportation support for protecting the electrical machine against damaging when the electrical machine is transported or is otherwise subject to external vibrations and/or impacts at standstill. Furthermore, the disclosure relates to a method for implementing a transportation support of an electrical machine. Furthermore, the disclosure relates to an electric drive.

### Background

While an electrical machine is at standstill and the electrical machine is transported as such or as a part of an application system, such as a working machine, by using a trailer, truck, locomotive, or ship, there is a possibility to damage the bearings of the electrical machine. Especially, in large electrical machines with substantially higher rotor masses, the bearings are at a significant risk to damage due to external vibration and impacts if not properly protected. The reason for the possible damages is that all rolling element bearings have a clearance to be able to be lubricated and to rotate with a low rolling resistance. Thus, external vibration and impacts may cause situation in which bearing surfaces bang against each other and get thereby damaged.

To avoid bearing damages of the kind mentioned above, there is a need to mechanically support the rotor of an electrical machine so that bearing surfaces are prevented from banging against each other when the electrical machine is transported or is otherwise subject to external vibrations and/or impacts at standstill. Arranging a sufficient mechanical support can be especially challenging when an electrical machine is a part of an application system, such as a working machine, which is being transported or is otherwise subject to external vibrations and/or impacts.

### Summary

The following presents a simplified summary to provide a basic understanding of some aspects of various embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments. EP 3 537 573 A1 discloses a fixing element for fixing rotor shaft of electric machine. US 2015 030277 A1 discloses a bearing arrangement of a wind turbine and method for adjusting the preload of a bearing arrangement.

**In** accordance with the invention, there is provided a new electrical machine that comprises:
- a stator,
- a rotor rotatably supported with respect to the stator and configured to electromagnetically interact with the stator to produce torque in response to one or more electric currents supplied to the electrical machine,
- bearings configured to rotatably support the rotor with respect to the stator, and
- a force generating device mechanically attached to the stator and comprising an actuator configured to direct an axial force to an end of a shaft of the rotor to remove clearances from the bearings, the force generating device comprising a hydraulic cylinder and the actuator of the force generating device comprising a hydraulic piston.

While the above-described electrical machine is transported or is otherwise subject to external vibrations and/or impacts at standstill, the actuator is controlled to direct axial force to the end of a shaft to remove clearances from the bearings and thereby to prevent bearing surfaces from banging against each to protect the bearings against damaging. While the electrical machine is used for its purpose as a motor or generator, the force generating device is advantageously in a mode where there is a physical air gap between the actuator and the end of the shaft.

In the above-described electrical machine, the fact that many bearings providing radial support can withstand also axial loads is utilized to support the rotor when the electrical machine is being transported or is otherwise subject to external vibrations and/or impacts at standstill. For example, rolling elements with round or convex shapes naturally remove a radial clearance when an outer race of a bearing is displaced axially from an inner race of the bearing.

The above-mentioned force generating device can be a hydraulic device where the actuator comprises a hydraulic piston. It is also possible that the force generating device is a pneumatic device having a pneumatically driven actuator or an electrical device having a magnetically driven actuator. It is to be noted that embodiments of the invention are not limited to any specific way or ways to direct an axial force to an end of a shaft of an electrical machine.

In accordance with the invention, there is also provided a new electric drive that comprises an electrical machine and a converter configured to drive the electrical machine. The electrical machine is an electrical machine according to an embodiment that comprises a status detection device configured to produce a status signal expressing whether the actuator directs an axial force to the end of the shaft of the rotor. The converter is configured to receive the status signal and to refrain from supplying voltage to the electrical machine when the actuator directs the axial force to the end of the shaft of the rotor to avoid an unintentional and possibly damaging starting of the electrical machine when the force generating device is active.

In accordance with the invention, there is also provided a new method for implementing a transportation support for an electrical machine that comprises:
- a stator,
- a rotor rotatably supported with respect to the stator and configured to electromagnetically interact with the stator to produce torque in response to electric current supplied to the electrical machine, and
- bearings configured to rotatably support the rotor with respect to the stator.

The method according to the invention comprises directing an axial force to an end of a shaft of the rotor to remove clearances from the bearings with the aid of a force generating device mechanically attached to the stator and comprising an actuator configured to direct the axial force to the end of the shaft of the rotor, the force generating device comprising a hydraulic cylinder and the actuator of the force generating device comprising a hydraulic piston.

In this document, the term "transportation support" means a support arrangement that is applicable for protecting against damages during transportation as well as during other situations in which an electrical machine is at standstill and subject to external vibrations and/or impacts.

Exemplifying and non-limiting embodiments are described in accompanied dependent claims.

Exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of unrecited features.

The features recited in dependent claims are mutually freely combinable unless otherwise explicitly stated.

Furthermore, it is to be understood that the use of "a" or "an", i.e. a singular form, throughout this document does not exclude a plurality.

### Brief description of the figures

Exemplifying and non-limiting embodiments and their advantages are explained in greater detail below in the sense of examples and with reference to the accompanying drawings, in which:
figure 1 illustrates an electrical machine according to an exemplifying and non-limiting embodiment,
figure 2 illustrates an electrical machine according to an exemplifying and non-limiting embodiment, and
figure 3 shows a flowchart of a method according to an exemplifying and non-limiting embodiment for implementing a transportation support for an electrical machine.

### Description of the exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

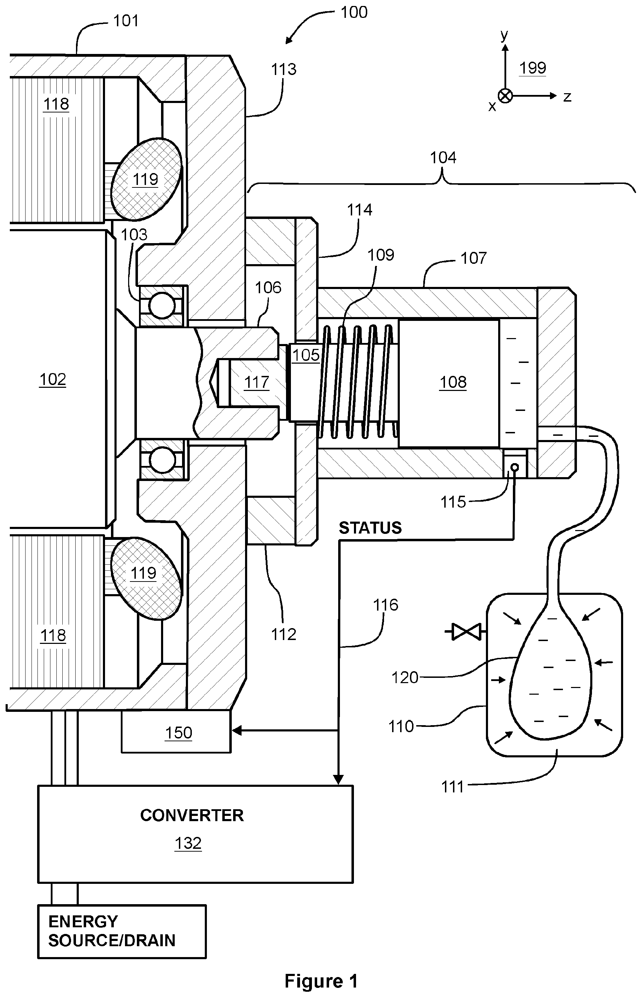

Figure 1 illustrates a part of an electrical machine 100 according to an exemplifying and non-limiting embodiment. The electrical machine 100 comprises a stator 101 and a rotor 102 that is rotatably supported with respect to the stator 101 and configured to electromagnetically interact with the stator to produce torque in response to currents supplied to the electrical machine. The electrical machine 100 can be for example an induction machine, a permanent magnet machine, a reluctance machine, or direct current "DC" machine. In figure 1, only the non-driving "ND" end of the electrical machine 100 is shown. The stator 101 is shown as a section view where the geometric section plane is parallel with the yz-plane of a coordinate system 199. The stator 102 comprises a stator core structure 118 and stator windings 119. The axial direction of the electrical machine 100 is parallel with the z-axis of the coordinate system 199. The electrical machine 100 comprises bearings configured to rotatably support the rotor 102 with respect to the stator 101. In figure 1, the bearing of the ND-end is denoted with a reference 103. In this exemplifying case, the bearing 103 is a ball bearing. Correspondingly, the bearing of the driving "D" end of the electrical machine 100 can be a ball bearing. The bearing of the D-end is not shown in figure 1.

The electrical machine 100 comprises a force generating device 104 that is mechanically attached to the stator 101 and comprises an actuator 105 configured to direct an axial force to an end of a shaft 106 of the rotor 102 to remove clearances from the bearings of the electrical machine 100. In figure 1, the end of the shaft 106 is shown as a section view where the geometric section plane is parallel with the yz-plane of the coordinate system 199. In this exemplifying case, the force generating device is at the ND-end of the electrical machine. It is however also possible that a force generating device is configured to direct an axial force to an end of a shaft at the D-end of the electrical machine. For example, there can be a gearwheel or a sheave attached to the end of the shaft of an electrical machine, and the force generating device is configured to direct an axial force to the end of the shaft that protrudes through the gearwheel or the sheave.

In the exemplifying electrical machine 100 illustrated in figure 1, the force generating device 104 is a hydraulic device that comprises a hydraulic cylinder 107 and the actuator 105 of the force generating device 104 comprises a hydraulic piston 108. In figure 1, the hydraulic cylinder 107 is shown as a section view where the geometric section plane is parallel with the yz-plane of the coordinate system 199. In this exemplifying case, the hydraulic cylinder 107 is a single-action hydraulic cylinder capable of pushing the hydraulic piston 108 towards the end of the shaft 106 of the rotor in the negative z-direction of the coordinate system 199. The force generating device 104 comprises a return spring 109 configured to push the hydraulic piston away from the end of the shaft 106 of the rotor in the positive z-direction of the coordinate system 199. It is also possible that a force generating device of an electrical machine according to an exemplifying and non-limiting embodiment is an electromagnetic device comprising an electromagnet for generating an axial force directed to an end of a shaft of the electrical machine. Furthermore, it is also possible that a force generating device of an electrical machine according to an exemplifying and non-limiting embodiment is a pneumatic device comprising a pneumatically driven actuator for generating an axial force directed to an end of a shaft of the electrical machine.

In the exemplifying electrical machine 100 illustrated in figure 1, the force generating device 104 comprises a pressurizer 110 that is capable of maintaining pressure of hydraulic fluid without external energy for example when the electrical machine 100 is transported or is otherwise subject to external vibrations and/or impacts and no external energy is available. In this exemplifying case, the pressurizer 110 comprises a body and a flexible bag 120 inside the body and containing the hydraulic fluid. The force generating device 104 is activated by pumping compressed flexible material 111, e.g. air or other gas, into the room between the body and the flexible bag 120. The flexible material 111 directs pressure to the flexible bag 120 and thereby maintains the pressure of hydraulic fluid. The force generating device 104 is deactivated by allowing the pressure of the flexible material 111 to drop down. Depending on requirements and availability or non-availability of external energy, different means for controlling the force generating device 104 are possible, e.g. an electrically driven hydraulic pump, a spring operated pressurizer, etc.

In the exemplifying electrical machine 100 illustrated in figure 1, the force generating device 104 comprises a collar section 112 attached to a bearing shield 113 of the electrical machine 100 and a flange section 114 connecting to the collar section. In figure 1, the collar section 112 and the flange section 114 are shown as section views where the geometric section plane is parallel with the yz-plane of the coordinate system 199. The hydraulic cylinder 107 is attached to the flange section 114 and the actuator 105 protrudes towards the end of the shaft 106 of the rotor via an aperture of the flange section 114.

The exemplifying electrical machine 100 illustrated in figure 1 comprises a protector element 117 between the actuator 105 of the force generating device 104 and the end of the shaft 106 of the rotor. In figure 1, the protector element 117 is shown as a section view where the geometric section plane is parallel with the yz-plane of the coordinate system 199. The protector element 117 is made of material softer than material of the shaft 106 of the rotor and protects the shaft of the rotor from shape deformations. The protector element 117 can be made of e.g. aluminum or nylon.

An electrical machine according to an exemplifying and non-limiting embodiment comprises a status detection device 115 configured to produce a status signal 116 that directly or indirectly expresses whether the actuator 105 directs an axial force to the end of the shaft 106 of the rotor 102. In the exemplifying electrical machine illustrated in figure 1, the status detection device 115 comprises a pressure sensor configured to detect the pressure of the hydraulic fluid and to produce the status signal 116 in accordance with the detected pressure. It is also possible that the status detection device of an electrical machine according to an exemplifying and non-limiting embodiment comprises a position sensor configured to detect the axial position of the actuator of the force generating device, or a mechanical sensor such as a strain gauge configured to detect mechanical stress or deformation in the actuator or in some other appropriate part of the force generating device. In an exemplifying case, where the force generating device is an electromagnetic force generating device, the status detection device may comprise a device for generating the status signal based on electric current of the electromagnetic force generating device. In an exemplifying case, where the force generating device is a pneumatic force generating device, the status detection device may comprise e.g. a gas pressure sensor or a device for generating the status signal based on operation of means for supplying pressurized gas e.g. air to the pneumatic force generating device. It is to be noted that the above-mentioned status signal can be produced in many ways, and the embodiments of the invention are not limited to any specific way or ways to produce the status signal.

The above-mentioned status signal 116 is advantageous in an electric drive that comprises the electrical machine 100 and a converter 132 configured to drive the electrical machine 100. The converter 132 is configured to receive the status signal 116 and to refrain from supplying voltage to the electrical machine 100 when the actuator 105 directs the axial force to the end of the shaft 106 to avoid an unintentional and possibly damaging starting of the electrical machine 100 when the force generating device 104 is active.

Furthermore, the status signal 116 can be used as a feedback signal supplied to a control device that is configured to control the force generating device. The feedback signal can be used for e.g. monitoring that the force generating device works correctly in response to control actions carried out by the control device. Concealed incorrect operation of the force generating device may lead to bearing damages during transportation as well as during other situations in which the electrical machine is at standstill and subject to external vibrations and/or impacts. The feedback signal can be used for generating an alarm in a case of incorrect operation of the force generating device. An electrical machine according to an exemplifying and non-limiting embodiment comprises a control device 150 configured to control the force generating device, to receive the status signal 116, and to generate an alarm in response to a situation in which i) the force generating device has been controlled to direct the axial force to the end of the shaft but ii) the status signal 116 expresses that no axial force is directed to the end of the shaft.

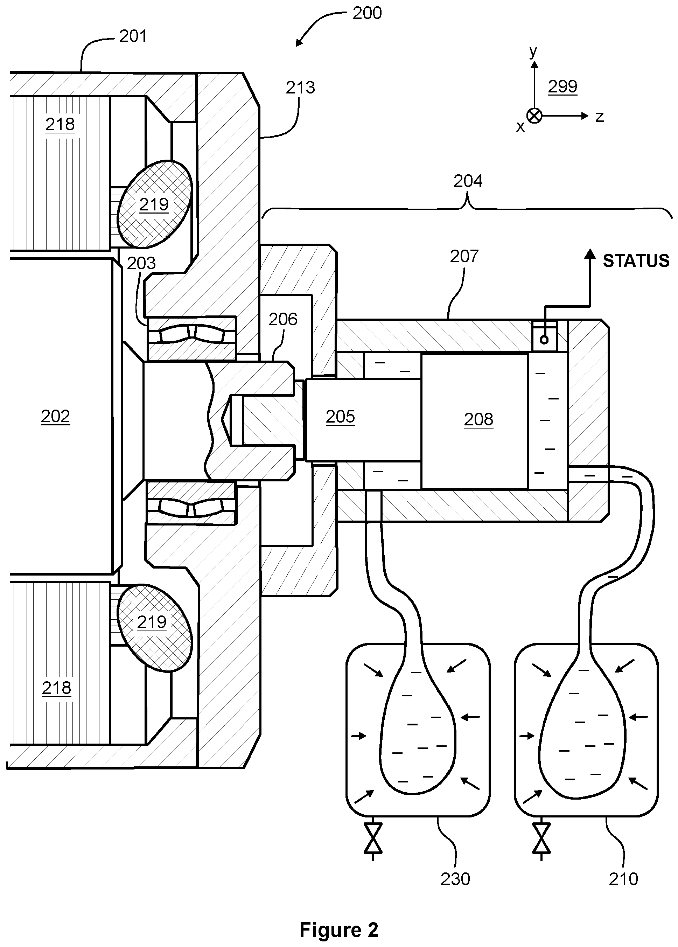

Figure 2 illustrates a part of an electrical machine 200 according to an exemplifying and non-limiting embodiment. The electrical machine 200 comprises a stator 201 and a rotor 202 that is rotatably supported with respect to the stator 201 and configured to electromagnetically interact with the stator to produce torque in response to currents supplied to the electrical machine. In figure 2, only the non-driving "ND" end of the electrical machine 200 is shown. The stator 201 is shown as a section view where the geometric section plane is parallel with the yz-plane of a coordinate system 299. The stator 202 comprises a stator core structure 218 and stator windings 219. The axial direction of the electrical machine 200 is parallel with the z-axis of the coordinate system 299. The electrical machine 200 comprises bearings configured to rotatably support the rotor 202 with respect to the stator 201. In figure 2, the bearing of the ND-end is denoted with a reference 203. In this exemplifying case, the bearing 203 is a spherical roller bearing. Correspondingly, the bearing of the driving "D" end of the electrical machine 200 can be a spherical roller bearing. The bearing of the D-end is not shown in figure 2.

The electrical machine 200 comprises a force generating device 204 that is mechanically attached to the stator 201 and comprises an actuator 205 configured to direct an axial force to an end of a shaft 206 of the rotor 202 to remove clearances from the bearings of the electrical machine 200. In figure 2, the end of the shaft 206 is shown as a section view where the geometric section plane is parallel with the yz-plane of the coordinate system 299. In this exemplifying case, the force generating device is at the ND-end of the electrical machine. The force generating device 204 comprises a hydraulic cylinder 207 and the actuator 205 of the force generating device comprises a hydraulic piston 208. In figure 2, the hydraulic cylinder 207 is shown as a section view where the geometric section plane is parallel with the yz-plane of the coordinate system 299. In this exemplifying case, the hydraulic cylinder 207 is a double-action hydraulic cylinder capable of pushing the hydraulic piston 208 towards the end of the shaft 206 of the rotor in the negative z-direction of the coordinate system 299, and capable of moving the hydraulic piston away from the end of the shaft of the rotor in the positive z-direction of the coordinate system 299. **In** the exemplifying electrical machine 200 illustrated in figure 2, the force generating device 204 comprises pressurizers 210 and 230 which are capable of maintaining pressures of hydraulic fluids in different compartments of the hydraulic cylinder 207 without external energy. **In** this exemplifying case, each of the pressurizers 210 and 230 comprises a body and a flexible bag inside the body and containing the hydraulic fluid.

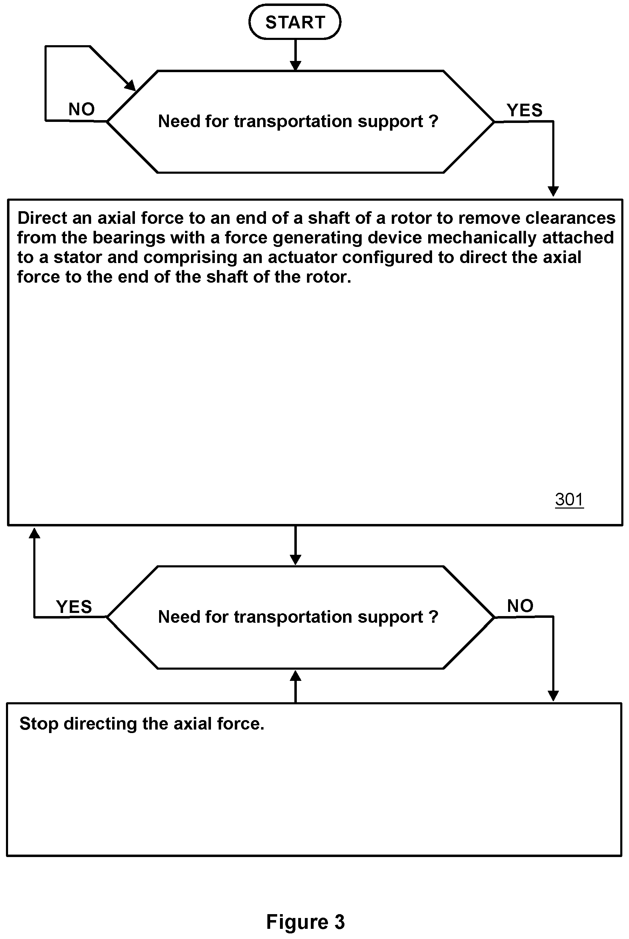

Figure 3 shows a flowchart of a method according to an exemplifying and non-limiting embodiment for implementing a transportation support for an electrical machine that comprises a stator, a rotor rotatably supported with respect to the stator and configured to electromagnetically interact with the stator to produce torque in response to electric current supplied to the electrical machine, and bearings configured to rotatably support the rotor with respect to the stator.

The specific examples provided in the description given above should not be construed as limiting the applicability and/or interpretation of the appended claims. It is to be noted that lists and groups of examples given in this document are non-exhaustive lists and groups unless otherwise explicitly stated.

## Claims

1. An electrical machine (100, 200) comprising:
- a stator (101, 201),
- a rotor (102, 202) rotatably supported with respect to the stator and configured to electromagnetically interact with the stator to produce torque in response to one or more electric currents supplied to the electrical machine,
- bearings (103, 203) configured to rotatably support the rotor with respect to the stator, and
- a force generating device (104, 204) mechanically attached to the stator and comprising an actuator (105, 205) configured to direct an axial force to an end of a shaft (106, 206) of the rotor to remove clearances from the bearings,
**characterized in that** the force generating device (104, 204) comprises a hydraulic cylinder (107, 207) and the actuator (105, 205) of the force generating device comprises a hydraulic piston (108, 208).

2. An electrical machine according to claim 1, wherein the hydraulic cylinder (207) is a double-action hydraulic cylinder capable of pushing the hydraulic piston (208) towards the end of the shaft of the rotor and capable of moving the hydraulic piston away from the end of the shaft of the rotor.

3. An electrical machine according to claim 1, wherein the hydraulic cylinder (107) is a single-action hydraulic cylinder capable of pushing the hydraulic piston (108) towards the end of the shaft of the rotor, and the force generating device (104) comprises a return spring (109) configured to push the hydraulic piston away from the end of the shaft of the rotor.

4. An electrical machine according to any one of claims 1-3, wherein the force generating device (104, 204) comprises a pressurizer (110, 210, 230) configured to maintain pressure of hydraulic fluid with an aid of flexible material (111) being compressed and tending to return to an uncompressed state.

5. An electrical machine according to any one of claims 1-4, wherein the force generating device (104, 204) comprises a collar section (112) attached to a bearing shield (113) of the electrical machine and a flange section (114) connecting to the collar section, the hydraulic cylinder (107, 207) being attached to the flange section and the actuator (105, 205) protruding towards the end of the shaft of the rotor via an aperture of the flange section.

6. An electrical machine according to any one of claims 1-5, wherein the electrical machine comprises a protector element (117) between the actuator (105) of the force generating device (104) and the end of the shaft (106) of the rotor, the protector element being made of material softer than material of the shaft (106) of the rotor and protecting the shaft of the rotor from shape deformations.

7. An electrical machine according to any one of claims 1-6, wherein the electrical machine comprises a status detection device (115) configured to produce a status signal (116) expressing whether the actuator (105, 205) directs the axial force to the end of the shaft (106, 206) of the rotor.

8. An electrical machine according to claim 7, wherein the electrical machine comprises a control device (150) configured to control the force generating device (104), to receive the status signal (116), and to generate an alarm in response to a situation in which i) the force generating device has been controlled to direct the axial force to the end of the shaft but ii) the status signal (116) expresses that no axial force is directed to the end of the shaft.

9. An electric drive that comprises:
- an electrical machine (100), and
- a converter (132) configured to drive the electrical machine,
wherein the electrical machine (100) is an electrical machine according to claim 7 or 8, and the converter is configured to receive the status signal and to refrain from supplying voltage to the electrical machine when the status signal expresses that the actuator directs the axial force to the end of the shaft of the rotor.

10. A method for implementing a transportation support for an electrical machine that comprises:
- a stator (101, 201),
- a rotor (102, 202) rotatably supported with respect to the stator and configured to electromagnetically interact with the stator to produce torque in response to electric current supplied to the electrical machine, and
- bearings (103, 203) configured to rotatably support the rotor with respect to the stator,
the method comprising directing (301) an axial force to an end of a shaft (106, 206) of the rotor to remove clearances from the bearings with a force generating device (104, 204) mechanically attached to the stator and comprising an actuator (105, 205) configured to direct the axial force to the end of the shaft of the rotor, **characterized in that** the force generating (104, 204) device comprises a hydraulic cylinder (107, 207) and the actuator (105, 205) of the force generating device comprises a hydraulic piston.

11. A method according to claim 10, wherein the hydraulic cylinder (207) is a double-action hydraulic cylinder capable of pushing the hydraulic piston (208) towards the end of the shaft of the rotor and capable of moving the hydraulic piston away from the end of the shaft of the rotor.

12. A method according to claim 10, wherein the hydraulic cylinder (107) is a single-action hydraulic cylinder capable of pushing the hydraulic piston towards the end of the shaft of the rotor, and the force generating device (104) comprises a return spring (109) configured to push the hydraulic piston away from the end of the shaft of the rotor.

13. A method according to any one of claims 10-12, wherein the method comprises maintaining pressure of hydraulic fluid with an aid of flexible material (111) being compressed and tending to return to an uncompressed state.

14. A method according to any one of claims 10-13, wherein the method comprises use of a protector element (117) between the actuator (205) of the force generating device (104) and the end of the shaft (106) of the rotor, the protector element being made of material softer than material of the shaft (106) of the rotor and protecting the shaft of the rotor from shape deformations.

15. A method according to any one of claims 10-14, wherein the method comprises:
- producing a status signal (116) expressing whether the actuator (105) directs the axial force to the end of the shaft (106) of the rotor,
- delivering the status signal to a converter (132) configured to drive the electrical machine, and
- disabling the converter to supply voltage to the electrical machine when the status signal expresses that the actuator directs the axial force to the end of the shaft of the rotor.

## Patentansprüche

1. Elektrische Maschine (100, 200), umfassend:
- einen Stator (101, 201),
- einen Rotor (102, 202), der in Bezug auf den Stator drehbar gelagert ist und dazu ausgestaltet ist, mit dem Stator elektromagnetisch zu wechselwirken, um als Reaktion auf einen oder mehrere elektrische(n) Strom/Ströme, der/die der elektrischen Maschine zugeführt wird/werden, ein Drehmoment zu erzeugen,
- Lager (103, 203), die dazu ausgestaltet sind, den Rotor in Bezug auf den Stator drehbar zu lagern, und
- eine Krafterzeugungsvorrichtung (104, 204), die mechanisch an dem Stator angebracht ist und einen Aktuator (105, 205) umfasst, der dazu ausgestaltet ist, eine axiale Kraft zu einem Ende einer Welle (106, 206) des Rotors zu richten, um Spiel von den Lagern zu nehmen,
**dadurch gekennzeichnet, dass** die Krafterzeugungsvorrichtung (104, 204) einen Hydraulikzylinder (107, 207) umfasst und der Aktuator (105, 205) der Krafterzeugungsvorrichtung einen Hydraulikkolben (108, 208) umfasst.

2. Elektrische Maschine nach Anspruch 1, wobei der Hydraulikzylinder (207) ein doppeltwirkender Hydraulikzylinder ist, der in der Lage ist, den Hydraulikkolben (208) hin zum Ende der Welle des Rotors zu schieben, und in der Lage ist, den Hydraulikkolben vom Ende der Welle des Rotors wegzubewegen.

3. Elektrische Maschine nach Anspruch 1, wobei der Hydraulikzylinder (107) ein einfachwirkender Hydraulikzylinder ist, der in der Lage ist, den Hydraulikkolben (108) hin zum Ende der Welle des Rotors zu schieben, und die Krafterzeugungsvorrichtung (104) eine Rückstellfeder (109) umfasst, die dazu ausgestaltet ist, den Hydraulikkolben vom Ende der Welle des Rotors wegzuschieben.

4. Elektrische Maschine nach einem der Ansprüche 1 - 3, wobei die Krafterzeugungsvorrichtung (104, 204) eine Druckbeaufschlagungseinrichtung (110, 210, 230) umfasst, die dazu ausgestaltet ist, mithilfe eines flexiblen Materials (111), das komprimiert wird und tendenziell in einen nicht komprimierten Zustand zurückkehrt, den Druck von Hydraulikflüssigkeit aufrechtzuerhalten.

5. Elektrische Maschine nach einem der Ansprüche 1 - 4, wobei die Krafterzeugungsvorrichtung (104, 204) einen Stegabschnitt (112) umfasst, der an einer Lagerabschirmung (113) der elektrischen Maschine und einem Flanschabschnitt (114), der mit dem Stegabschnitt verbunden ist, angebracht ist, wobei der Hydraulikzylinder (107, 207) an dem Flanschabschnitt angebracht ist und der Aktuator (105, 205) über eine Öffnung des Flanschabschnitts hin zum Ende der Welle des Rotors vorsteht.

6. Elektrische Maschine nach einem der Ansprüche 1 - 5, wobei die elektrische Maschine ein Schutzelement (117) zwischen dem Aktuator (105) der Krafterzeugungsvorrichtung (104) und dem Ende der Welle (106) des Rotors umfasst, wobei das Schutzelement aus einem Material hergestellt ist, das weicher als das Material der Welle (106) des Rotors ist, und die Welle des Rotors vor Verformungen schützt.

7. Elektrische Maschine nach einem der Ansprüche 1 - 6, wobei die elektrische Maschine eine Statuserkennungsvorrichtung (115) umfasst, die dazu ausgestaltet ist, ein Statussignal (116) zu erzeugen, das ausdrückt, ob der Aktuator (105, 205) die axiale Kraft zum Ende der Welle (106, 206) des Rotors richtet.

8. Elektrische Maschine nach Anspruch 7, wobei die elektrische Maschine eine Steuervorrichtung (150) umfasst, die dazu ausgestaltet ist, die Krafterzeugungsvorrichtung (104) zu steuern, das Statussignal (116) zu empfangen und als Reaktion auf eine Situation, in der i) die Krafterzeugungsvorrichtung dazu gesteuert wurde, die axiale Kraft zum Ende der Welle zu richten, aber ii) das Statussignal (116) ausdrückt, dass keine axiale Kraft zum Ende der Welle gerichtet ist, einen Alarm auszulösen.

9. Elektroantrieb, der Folgendes umfasst:
- eine elektrische Maschine (100) und
- einen Wandler (132), der dazu ausgestaltet ist, die elektrische Maschine anzutreiben,
wobei die elektrische Maschine (100) eine elektrische Maschine nach Anspruch 7 oder 8 ist und der Wandler dazu ausgestaltet ist, das Statussignal zu empfangen und das Zuführen von Spannung zu der elektrischen Maschine zu unterlassen, wenn das Statussignal ausdrückt, dass der Aktuator die axiale Kraft zum Ende der Welle des Rotors richtet.

10. Verfahren zur Implementierung einer Transportunterstützung für eine elektrische Maschine, die Folgendes umfasst:
- einen Stator (101, 201),
- einen Rotor (102, 202), der in Bezug auf den Stator drehbar gelagert ist und dazu ausgestaltet ist, mit dem Stator elektromagnetisch zu wechselwirken, um als Reaktion auf einen elektrischen Strom, welcher der elektrischen Maschine zugeführt wird, ein Drehmoment zu erzeugen,
- Lager (103, 203), die dazu ausgestaltet sind, den Rotor in Bezug auf den Stator drehbar zu lagern,
wobei das Verfahren das Richten (301) einer axialen Kraft zu einem Ende einer Welle (106, 206) des Rotors, um Spiel von den Lagern zu nehmen, mit einer Krafterzeugungsvorrichtung (104, 204), die mechanisch an dem Stator angebracht ist und einen Aktuator (105, 205) umfasst, der dazu ausgestaltet ist, die axiale Kraft zum Ende der Welle des Rotors zu richten, umfasst,
**dadurch gekennzeichnet, dass** die Krafterzeugungsvorrichtung (104, 204) einen Hydraulikzylinder (107, 207) umfasst und der Aktuator (105, 205) der Krafterzeugungsvorrichtung einen Hydraulikkolben umfasst.

11. Verfahren nach Anspruch 10, wobei der Hydraulikzylinder (207) ein doppeltwirkender Hydraulikzylinder ist, der in der Lage ist, den Hydraulikkolben (208) hin zum Ende der Welle des Rotors zu schieben, und in der Lage ist, den Hydraulikkolben vom Ende der Welle des Rotors wegzubewegen.

12. Verfahren nach Anspruch 10, wobei der Hydraulikzylinder (107) ein einfachwirkender Hydraulikzylinder ist, der in der Lage ist, den Hydraulikkolben hin zum Ende der Welle des Rotors zu schieben, und die Krafterzeugungsvorrichtung (104) eine Rückstellfeder (109) umfasst, die dazu ausgestaltet ist, den Hydraulikkolben vom Ende der Welle des Rotors wegzuschieben.

13. Verfahren nach einem der Ansprüche 10 - 12, wobei das Verfahren das Aufrechterhalten eines Drucks von Hydraulikflüssigkeit mithilfe eines flexiblen Materials (111), das komprimiert wird und tendenziell in einen nicht komprimierten Zustand zurückkehrt, umfasst.

14. Verfahren nach einem der Ansprüche 10 - 13, wobei das Verfahren die Verwendung eines Schutzelements (117) zwischen dem Aktuator (205) der Krafterzeugungsvorrichtung (104) und dem Ende der Welle (106) des Rotors umfasst, wobei das Schutzelement aus einem Material hergestellt ist, das weicher als das Material der Welle (106) des Rotors ist, und die Welle des Rotors vor Verformungen schützt.

15. Verfahren nach einem der Ansprüche 10 - 14, wobei das Verfahren Folgendes umfasst:
- Erzeugen eines Statussignals (116), das ausdrückt, ob der Aktuator (105) die axiale Kraft zum Ende der Welle (106) des Rotors richtet,
- Zuführen des Statussignals zu einem Wandler (132), der dazu ausgestaltet ist, die elektrische Maschine anzutreiben, und
- Deaktivieren, dass der Wandler der elektrischen Maschine Spannung zuführt, wenn das Statussignal ausdrückt, dass der Aktuator die axiale Kraft zum Ende der Welle des Rotors richtet.

## Revendications

1. Machine électrique (100, 200) comprenant :
- un stator (101, 201),
- un rotor (102, 202) supporté de manière rotative par rapport au stator et configuré pour interagir de manière électromagnétique avec le stator pour fournir un couple en réponse à un ou plusieurs courants électriques fournis à la machine électrique,
- des paliers (103, 203) configurés pour supporter le rotor de manière rotative par rapport au stator, et
- un dispositif générateur de force (104, 204) attaché mécaniquement au stator et comprenant un actionneur (105, 205) configuré pour diriger une force axiale sur une extrémité d'un arbre (106, 206) du rotor pour éliminer les jeux au niveau des paliers,
**caractérisée en ce que** le dispositif générateur de force (104, 204) comprend un vérin hydraulique (107, 207) et que l'actionneur (105, 205) du dispositif générateur de force comprend un piston hydraulique (108, 208).

2. Machine électrique selon la revendication 1, dans laquelle le vérin hydraulique (207) est un vérin hydraulique double effet capable de pousser le piston hydraulique (208) vers l'extrémité de l'arbre du rotor et capable d'éloigner le piston hydraulique de l'extrémité de l'arbre du rotor.

3. Machine électrique selon la revendication 1, dans laquelle le vérin hydraulique (107) est un vérin hydraulique simple effet capable de pousser le piston hydraulique (108) vers l'extrémité de l'arbre du rotor, et le dispositif générateur de force (104) comprend un ressort de rappel (109) configuré pour éloigner le piston hydraulique de l'extrémité de l'arbre du rotor.

4. Machine électrique selon l'une quelconque des revendications 1-3, dans laquelle le dispositif générateur de force (104, 204) comprend un pressuriseur (110, 210, 230) configuré pour maintenir une pression d'un fluide hydraulique à l'aide d'un matériau flexible (111) qui est comprimé et a tendance à retourner à un état non-comprimé.

5. Machine électrique selon l'une quelconque des revendications 1-4, dans laquelle le dispositif générateur de force (104, 204) comprend une section d'épaulement (112) attachée à un flasque de palier (113) de la machine électrique et une section de bride (114) se connectant à la section d'épaulement, le vérin hydraulique (107, 207) étant attaché à la section de bride et l'actionneur (105, 205) dépassant vers l'extrémité de l'arbre du rotor à travers une ouverture de la section de bride.

6. Machine électrique selon l'une quelconque des revendications 1-5, dans laquelle la machine électrique comprend un élément protecteur (117) entre l'actionneur (105) du dispositif générateur de force (104) et l'extrémité de l'arbre (106) du rotor, l'élément protecteur étant réalisé dans un matériau plus doux que le matériau de l'arbre (106) du rotor et protégeant l'arbre du rotor de déformations de forme.

7. Machine électrique selon l'une quelconque des revendications 1-6, dans laquelle la machine électrique comprend un dispositif de détection d'état (115) configuré pour produire un signal d'état (116) indiquant si l'actionneur (105, 205) dirige la force axiale sur l'extrémité de l'arbre (106, 206) du rotor.

8. Machine électrique selon la revendication 7, dans laquelle la machine électrique comprend un dispositif de commande (150) configuré pour commander le dispositif générateur de force (104), recevoir le signal d'état (116) et générer une alarme en réponse à une situation dans laquelle i) le dispositif générateur de force a été commandé pour diriger la force axiale sur l'extrémité de l'arbre, mais ii) le signal d'état (116) indique qu'aucune force axiale n'est dirigée sur l'extrémité de l'arbre.

9. Propulsion électrique qui comprend :
- une machine électrique (100), et
- un convertisseur (132) configuré pour actionner la machine électrique,
dans laquelle la machine électrique (100) est une machine électrique selon la revendication 7 ou 8, et le convertisseur est configuré pour recevoir le signal d'état et s'abstenir de fournir une tension à la machine électrique lorsque le signal d'état indique que l'actionneur dirige la force axiale sur l'extrémité de l'arbre du rotor.

10. Procédé de mise en œuvre d'un support de transport pour une machine électrique qui comprend :
- un stator (101, 201),
- un rotor (102, 202) supporté de manière rotative par rapport au stator et configuré pour interagir de manière électromagnétique avec le stator pour fournir un couple en réponse à un courant électrique fourni à la machine électrique, et
- des paliers (103, 203) configurés pour supporter le rotor de manière rotative par rapport au stator,
procédé comprenant la direction (301) d'une force axiale sur une extrémité d'un arbre (106, 206) du rotor pour éliminer les jeux au niveau des paliers avec un dispositif générateur de force (104, 204) attaché mécaniquement au stator et comprenant un actionneur (105, 205) configuré pour diriger la force axiale sur l'extrémité de l'arbre du rotor, **caractérisé en ce que** le dispositif générateur de force (104, 204) comprend un vérin hydraulique (107, 207) et que l'actionneur (105, 205) du dispositif générateur de force comprend un piston hydraulique.

11. Procédé selon la revendication 10, dans lequel le vérin hydraulique (207) est un vérin hydraulique double effet capable de pousser le piston hydraulique (208) vers l'extrémité de l'arbre du rotor et capable d'éloigner le piston hydraulique de l'extrémité de l'arbre du rotor.

12. Procédé selon la revendication 10, dans lequel le vérin hydraulique (107) est un vérin hydraulique simple effet capable de pousser le piston hydraulique vers l'extrémité de l'arbre du rotor, et le dispositif générateur de force (104) comprend un ressort de rappel (109) configuré pour éloigner le piston hydraulique de l'extrémité de l'arbre du rotor.

13. Procédé selon l'une quelconque des revendications 10-12, dans lequel le procédé comprend le maintien d'une pression d'un fluide hydraulique à l'aide d'un matériau flexible (111) qui est comprimé et a tendance à retourner à un état non comprimé.

14. Procédé selon l'une quelconque des revendications 10-13, dans lequel le procédé comprend l'utilisation d'un élément protecteur (117) entre l'actionneur (205) du dispositif générateur de force (104) et l'extrémité de l'arbre (106) du rotor, l'élément protecteur étant réalisé dans un matériau plus doux que le matériau de l'arbre (106) du rotor et protégeant l'arbre du rotor de déformations de forme.

15. Procédé selon l'une quelconque des revendications 10-14, dans lequel le procédé comprend :
- la production d'un signal d'état (116) indiquant si l'actionneur (105) dirige la force axiale sur l'extrémité de l'arbre (106) du rotor,
- la fourniture du signal d'état à un convertisseur (132) configuré pour actionner la machine électrique, et
- la désactivation du convertisseur afin qu'il ne fournisse plus de tension à la machine électrique lorsque le signal d'état indique que l'actionneur dirige la force axiale sur l'extrémité de l'arbre du rotor.
